(19) Europäisches Patentamt
European Patent Office
Office européen des brevets

(11) **EP 1 787 613 B1**

(12) **EUROPEAN PATENT SPECIFICATION**

(45) Date of publication and mention
of the grant of the patent:
**18.08.2010 Bulletin 2010/33**

(51) Int Cl.:
***A61G 3/06*** (2006.01)

(21) Application number: **06124449.7**

(22) Date of filing: **21.11.2006**

(54) **Vehicle, device and process for accessing said vehicle by persons with reduced mobility**

Fahrzeug, Vorrichtung und Verfahren zum Einsteigen in besagtes Fahrzeug seitens Personen mit beschränkter Mobilität

Véhicule, dispositif et procédé d'accès à un véhicule par des personnes à mobilité réduite

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.11.2005 FR 0511760**

(43) Date of publication of application:
**23.05.2007 Bulletin 2007/21**

(73) Proprietor: **Iveco France S.A.**
**69200 Vénissieux (FR)**

(72) Inventor: **Desneux, Alexandre**
**38460, Chamagnieu (FR)**

(74) Representative: **Borsano, Corrado et al**
**Notarbartolo & Gervasi S.p.A.**
**Corso di Porta Vittoria, 9**
**20122 Milano (IT)**

(56) References cited:
**WO-A-97/46417      BE-A3- 1 007 255**
**DE-A1- 3 708 294      DE-A1- 4 330 638**
**US-A- 3 765 692      US-A- 5 700 026**

**Description**

The present invention concerns a vehicle, a device and a process for accessing the vehicle by persons with reduced mobility.

Existing transport vehicles for persons with reduced mobility include :

- a floor which supports persons with reduced mobility,
- a controllable mechanism to adjust the height of the floor with respect to a rolling surface of the vehicle, and
- a device for accessing the vehicle by persons with reduced mobility, equipped with an access ramp that is joined to the vehicle and can be moved between an open position in which it reduces the space between the floor of the vehicle and a docking surface on an exterior platform to help persons with reduced mobility to board or alight, and a retracted position inside the vehicle.

An example of a transport vehicle provided with a mechanism to adjust the height of the floor with respect to a rolling surface of the vehicle is disclosed in WO 97/46417. This prior art patent discloses a vehicle provided with a ramp, the vehicle being suitable to be lowered to the ground level by means of a control switch manually operated by an operator. Only two positions of the floor of the vehicle are allowed by the system: an supper travelling position and a lowered position for loading and unloading.

In existing vehicles, the access device also has an internal mechanism to allow the access ramp to be opened out onto platforms of different heights. This is necessary as the heights of the platforms vary from one place to the next. A platform is, for example, a pavement.

However, said internal mechanism in the access device complicates the production of said access devices and makes them expensive.

The present invention aims to provide a solution to this inconvenience by proposing a vehicle equipped with a more simple access device. The object of the invention is therefore a transport vehicle for persons with reduced mobility, equipped with an access device to the vehicle for said persons with reduced mobility, having a control unit able to automatically guide the mechanism which adjusts the height of the vehicle floor depending on the height of the platform in a direction perpendicular to the rolling surface of the vehicle.

In the aforesaid vehicle, the adjustment of the height of the vehicle floor with respect to the height of the docking surface allows the access device to be adapted to different heights of platform, without it being necessary to resort to an internal mechanism in the device to achieve said adjustment. Thus, the access device can be simplified or its range of operation can be extended.

A further object of the invention is the access device employed in the aforesaid vehicle.

The forms of implementation of said access device may involve one or more of the following characteristics:

- the control unit is able to automatically guide the adjustment mechanism depending on the distance h between a first and a second parallel planes, the first plane being integral with the floor and parallel to the floor and the second plane being integral with the platform and parallel to the docking surface to adjust the height of the access device with respect to the docking surface;
- the access ramp can only be moved on a plane parallel to the vehicle floor;
- the control unit is able to automatically command the adjustment mechanism to maintain the height of the vehicle floor in a predetermined range of operation for at least as long as the ramp is in its open position;
- the device includes at least one sensor able to measure a distance $c$ along a line of sight that can be moved with respect to the platform when the vehicle stops, said distance $c$ being dependent on the height of the platform, and
- the control unit is able to guide the adjustment mechanism according to the position of an extreme of the second derivative of the distance $c$ with respect to a physical magnitude representing the position of the line of sight.

The forms of implementation of the access device also present the following advantages:

- an access device whose the ramp can only be moved along a plane parallel to the vehicle floor is particularly simple and inexpensive,
- adjusting the height of the vehicle floor as long as the ramp is in its opened position allows to keep the device at a height that is adapted to the platform itself even if the weight exerted on the vehicle floor varies due to the fact that passengers are getting on or off the vehicle, and
- guiding the adjustment mechanism according to the position of an extreme of the second derivative of the distance $c$ allows to adjust the height of the floor with respect to the platform without knowing the incline of the line of sight of the sensor with respect to the docking surface.

A further object of the invention is a process for accessing a transport vehicle for persons with reduced mobility, with the help of the aforesaid access device, this process comprising:

- a step in which the access ramp is opened up from its retracted position to its open position, and
- a step wherein the adjustment mechanism for the height of the floor is automatically guided according to the height of the platform in a direction perpendicular to the rolling surface.

The forms of implementation of this process can include one or more of the following characteristics :

- a step in which the adjustment mechanism is automatically guided to maintain the height of the floor within a predetermined range while the access ramp is in its open position;
- a step to measure a distance $c$ along a line of sight that can be moved with respect to the exterior platform while the vehicle is stopped, said distance $c$ depending on the height of the platform, and one step in which adjustment mechanism is guided according to the position of an extreme of the second derivative of the distance $c$ with respect to a physical magnitude representing the position of the line of sight.

The invention will be better understood in the light of the following description, which is given purely by way of example and with reference to the annexed drawings, in which:

- figure 1 is a schematic illustration of a vehicle equipped with a device for accessing the vehicle for persons with reduced mobility,
- figure 2 is a view from above of an access ramp of the access device in figure 1,
- figure 3 is a flow chart of a process for accessing the vehicle for persons with reduced mobility with the help of the device in figure 1,
- figure 4 is another embodiment of a process for accessing the vehicle for persons with reduced mobility, and
- figure 5 is a graph illustrating the evolution of a measured distance $c$ in dependence of the height $h_v$ of the vehicle.

For persons with reduced mobility are in particular meant persons in a wheelchair or persons who have difficulty boarding a vehicle such as a bus.

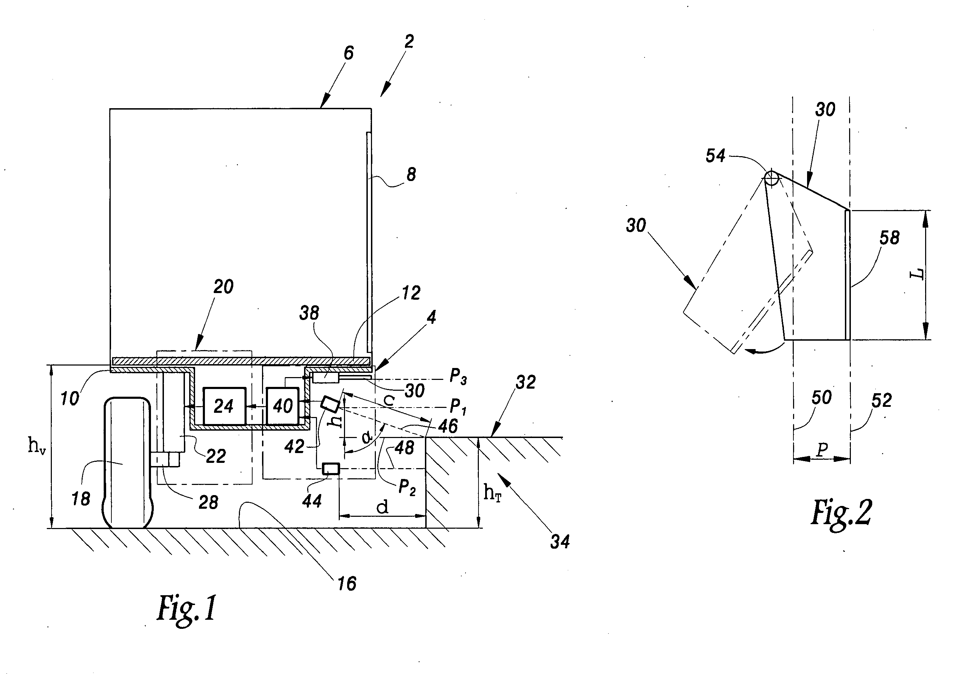

Figure 1 is a schematic representation of the vertical cross-section of the structure of a vehicle 2 equipped with a device 4 for accessing said vehicle for persons with reduced mobility. The plane of the cross-section is perpendicular to the direction of movement of the vehicle 2.

For example, vehicle 2 is a public transport vehicle such as a bus.

Vehicle 2 includes a body 6 equipped with a door 8 to allow passengers to board or alight vehicle 2. Said body 6 rests on a chassis 10.

Vehicle 2 also includes a floor 12 designed to support passengers inside the vehicle 2. The floor 12 also rests on the chassis.

The chassis 10 itself rests on the wheels of the vehicle 2 which rest on a rolling surface 16 on the ground.

In order to simplify figure 1, only one wheel 18 has been shown.

Surface 16 is, for example, the surface of a road or any traffic route.

Surface 16 is, here, assumed to be horizontal.

A mechanism 20 to adjust the height $h_v$ of the floor 12 with respect to the surface 16 on vehicle 2 which rests, is provided for in this vehicle.

By way of example, the mechanism 20 includes an inflatable suspension cushion 22 and a controllable compressor 24 suitable to regulate the pressure inside the cushion 22. When the pressure inside the cushion 22 rises, the height $h_v$ rises and vice versa.

Here, the cushion 22 is shown as being located between the chassis 10 and an axle 28 of the wheel 18.

The device 4 is equipped with an access ramp 30 that can be moved between an open position in which it reduces the space between the floor 12 and a docking surface 32, and a retracted position (shown in figure 1) inside vehicle 2.

Here, the surface 32 is the upper surface of an exterior platform 34 on which people with reduced mobility can move in order to board the vehicle 2 or, contrarily, to alight. Said surface 32 is situated at a height $h_T$ with respect to surface 16. Height $h_T$ is measured in a direction perpendicular to the surface 16.

Here, the ramp 30 can be moved between its open position and its retracted position by a controllable motor 38. Motor 38 is controlled by a control unit 40. The control unit 40 is able to receive a command to open out or on the contrary to retract, sent by the driver of vehicle 2.

Device 4 also includes a sensor 42 to measure a distance $c$ and a sensor 44 to measure a distance $d$ fixed on the vehicle 2.

Sensor 42 is able to measure distance $\underline{c}$ along a line of sight 46. The line of sight is inclined at an angle $\alpha$ with respect to the vertical of vehicle 2 in the cross-section drawing.

Here, $P_1$ designates a plane integral with vehicle 2 and parallel to the floor 12. Plane $P_1$ crosses the line of sight 46 at the level of the sensor 42.

A plane $P_2$ is also designated, integral with the platform 34 and parallel to the docking surface 32. Planes $P_1$ and $P_2$ are, here, parallel to each other and separated by a distance h measured in a direction that is perpendicular to plane $P_1$. To make the illustration clearer, the distance $\underline{h}$ has been exaggerated in figure 1.

A plane $P_3$ parallel to the floor 12 is a median plane of the ramp 30.

Sensor 44 measures the distance $\underline{d}$ along a line of sight 48. The line of sight 48 is parallel to plane $P_1$, aligned in a direction perpendicular to the direction in which the vehicle 2 is travelling, and directed towards the platform 34.

Sensors 42 and 44 are linked to the unit 40.

Finally, unit 40 is able to guide the mechanism 20 according to the distance $\underline{h}$ separating plane $P_1$ from plane $P_2$, so as to adjust the height of the device 4 according to the height $h_T$ of the platform 34.

More precisely, unit 40 is able to control the compressor 24 to modify the pressure inside the inflatable cushion 22.

Unit 40 also includes a memory containing the various thresholds and parameters necessary for it to work.

Figure 2 shows in unbroken lines a view from above of the ramp 30 in its open position. In figure 2, a broken line 50 shows the limit of the vehicle body 6 vertically above the door 8, and a broken line 52 shows the limit of the surface 32 on which passengers board and alight.

The dotted lines in figure 2 show the ramp 30 in its retracted position. Ramp 30 can only be opened in the plane $P_3$ around a vertical axis of rotation 54. The direction in which the ramp 30 opens is shown by an arrow on figure 2.

In its open position, the useful surface of the ramp 30 onto which people with reduced mobility move when they want to board or alight from the vehicle 2, is approximately rectangular. The width of this active surface L is between 60cm and 1.5m, preferably in the range of 60cm and 1cm. The depth P of this active surface is between 10 and 50cm and preferably in the range of 25 and 35cm.

An obstacle detector 58 is provided for on the surface of the ramp 30 opposite the platform 34 in its open position.

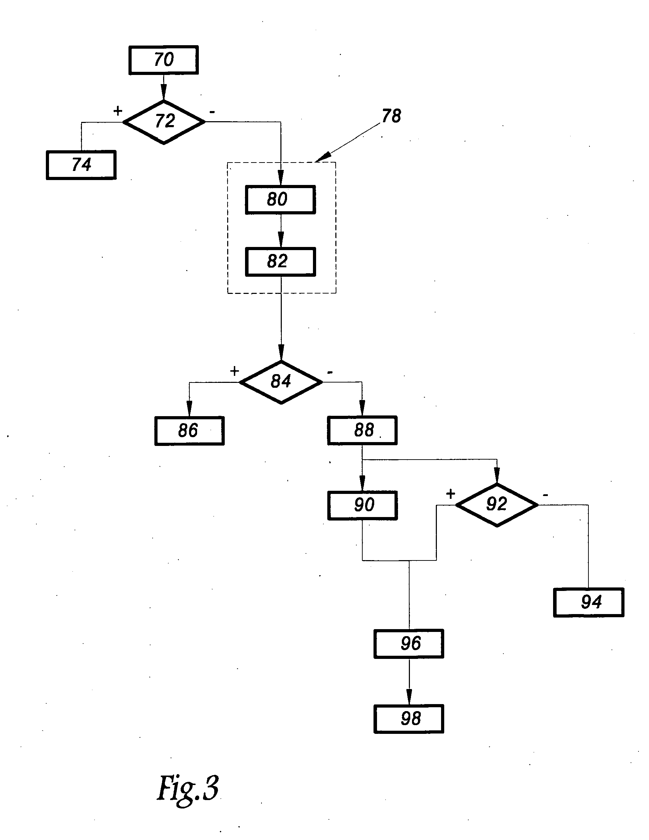

The functioning of device 4 shall now be described with the help of figure 3.

When the vehicle 2 stops alongside the platform 34 and in response to a command from the driver in step 70, the sensor 44 measures the distance $\underline{d}$.

Next, in step 72, unit 40 checks that the distance $\underline{d}$ is less than a predetermined threshold $S_1$. Should that not be the case, unit 40 prevents, in step 74, the opening of the ramp 30. Indeed, the opening of the ramp in this case would not be at all helpful for persons with reduced mobility, as this opening would not cover more than 95% of the distance between the edges 50 and 52.

On the contrary, that is to say if the measured distance $\underline{d}$ is less than the limit $S_1$, distance h is measured, in step 78.

More precisely, in an operation 80, the sensor 42 measures distance $\underline{c}$ and transmits it to unit 40. In operation 82, when unit 40 receives the distance $\underline{c}$, said unit calculates distance $\underline{h}$ with the help of the following relation:

$$h = c.\cos\alpha \qquad (1)$$

Next, in step 84, unit 40 checks that the measured distance h is comprised in a permissible operative range $[S_2 ; S_3]$.

If the measured distance h is not within the range $[S_2 ; S_3]$, then in step 86, unit 40 prevents ramp 30 from opening. Indeed, the difference in height between planes $P_1$ and $P_2$ is such that it is impossible to adjust the height $h_v$ of the vehicle floor so as to bring plane $P_3$ to the level of plane $P_2$.

Should the measured height $\underline{h}$ be within the range $[S_2 ; S_3]$, then in step 88 unit 40 guides the mechanism 20 to adjust the height of the vehicle floor 12 according to the measured height h. More precisely, here unit 40 guides the mechanism 20 until plane $P_3$ meets plane $P_2$ or is distant from plane $P_2$ by a distance of less than 5cm, and preferably less then 2cm.

Once the distance between plane $P_2$ and plane $P_3$ is less than 2cm, in step 90 the unit 40 orders the opening of the ramp 30. In step 90, ramp 30 is opened from its retracted position to its open position.

In parallel to step 90, in step 92, unit 40 constantly checks that the detector 58 has not detected any obstacles. If it has, unit 40 immediately interrupts the opening of the ramp 30, in step 94. If not, ramp 30 is opened to its fully open position.

Once ramp 30 has been opened out, the door 8 is open and persons with reduced mobility can board or alight the vehicle 2.

In step 96, while the ramp 30 is in its open position, unit 40 regulates the height $h_v$ to maintain it constant. Thus, although the weight of the vehicle 2 changes due to the fact that passengers are boarding and alighting from the vehicle, the height $h_v$ remains constant and plane $P_3$ remains at an acceptable distance from plane $P_2$.

Step 96 lasts until unit 40 orders, with step 98, the retraction of the access ramp. Step 98 is, for example, triggered by a command sent by the driver.

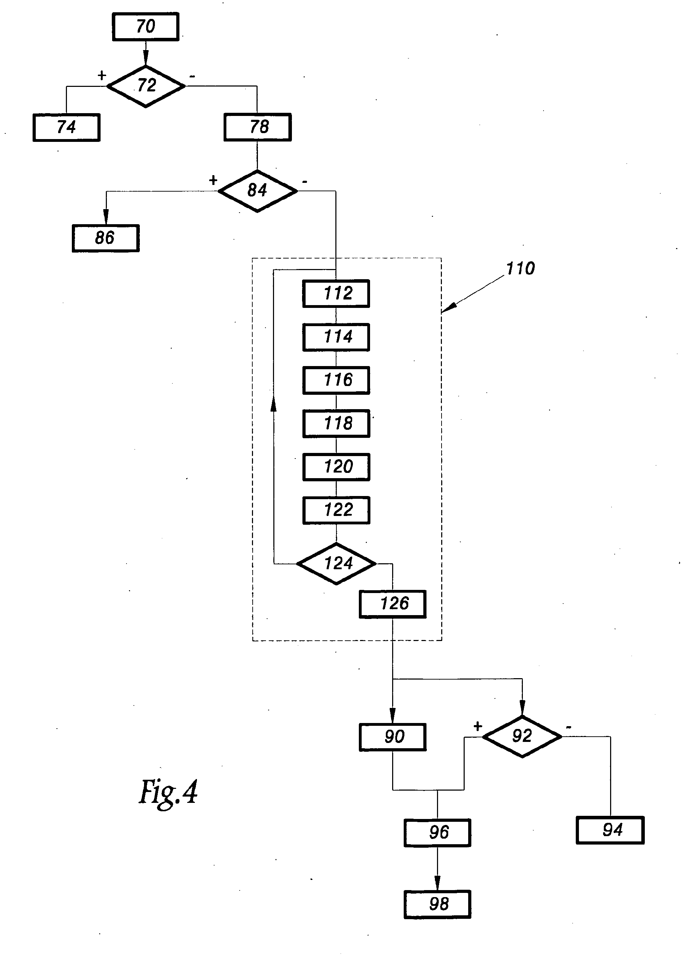

Figure 4 shows another process for accessing the vehicle 2 with the help of the device 4. This process is identical to that in figure 3 with the exception of step 88, which is replaced by step 110 to adjust the height $h_v$.

At the beginning of step 100, when an operation 112 takes place, the sensor 42 measures the distance $c(h_v)$. Next, with operation 114, unit 40 guides the mechanism 20 to vertically move the line of sight 48 at a predetermined pitch $\Delta h$. For example, unit 40 gradually lowers the height $h_v$ from a maximum height $h_v$.

Next, in operation 116, the sensor 42 measures the new distance $c(h_v+\Delta h)$.

In operation 118, unit 40 once again lowers the line of sight 48 at pitch $\Delta h$ and, in operation 120, sensor 42 measures the distance $c(h_v+2\Delta h)$.

Using the measured distances $c(h_v)$, $c(h_v+\Delta h)$ and $c(h_v+2\Delta h)$, in operation 122 unit 40 calculates the second derivative of distance $\underline{c}$ in relationship to height $h_v$ with the help, for example, of the following relation:

$$\frac{dc^2}{dh_v^2} = \frac{c(h_v) - 2c(h_v - \Delta h) + c(h_v + 2\Delta h)}{\Delta h^2} \qquad (2)$$

In operation 124, unit 40 checks whether the second derivative $\dfrac{dc^2}{dh_v^2}$ has reached an extreme.

For example, unit 40 compares the second derivative $\dfrac{dc^2}{dh_v^2}$ to a predetermined threshold $\varepsilon$. If the second $\dfrac{dc^2}{dh_v^2}$ is less than the threshold $\varepsilon$, steps 112 and 124 are repeated. If not, in operation 126 unit 40 guides the mechanism 20 to take plane $P_3$ to the level of plane $P_2$, then step 110 stops and the process continues with steps 90 and 92. In operation 126, distance $\underline{d}$ is used to determine the lowering of the vehicle floor that will allow plane $P_3$ to be brought to the level of plane $P_2$.

Indeed, when the line of sight 46 points at the angle between the surface 32 and the vertical of the platform 34, the second derivative $\dfrac{dc^2}{dh_v^2}$ is maximum. In this case, the distance h can then be calculated with the help of the following relation:

$$h = \sqrt{\left(c^2 - d^2\right)}$$

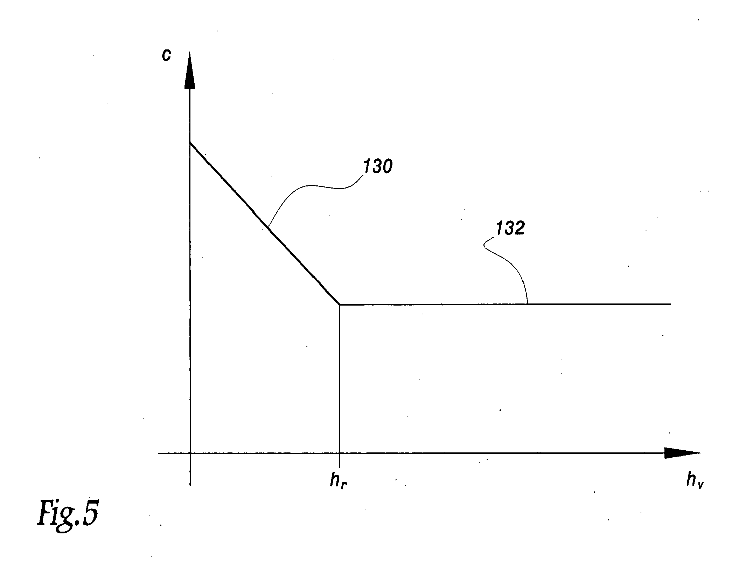

Figure 5 shows the evolution of the distance $\underline{c}$ according to the height of the vehicle 2 in the specific case of the platform 34. More precisely, when the line of sight 46 points at the surface 32, each time the height $h_v$ is lowered by the pitch $\Delta h$, distance $\underline{c}$ decreases. This is represented by a declining straight line 130 in figure 5. Distance $\underline{c}$ stops decreasing when the line of sight points at the vertical part of platform 34. This is represented by the straight line 132 parallel to the axis of the abscissas. The point where these straight lines 130 and 132 intersect is the position in which the line of sight 46 points at edge 52. In this case, the second derivative of distance $\underline{c}$ with respect to height $h_v$ passes through a maximum when the height $h_v$ is gradually lowered from a maximum height. The process in figure 4 does not require knowledge of angle $\alpha$ and is more robust compared to an inclination of plane $P_2$ with respect to plane $P_1$.

Many other forms of implementation are possible. For example, once the height of the bus has been adjusted according to the height $h_T$ of the platform 34, the ramp 30 can be moved manually. In this variation, the motor 38 is not necessary.

As a variation, the plane $P_3$ into which the ramp 30 moves, is inclined with respect to planes $P_1$ and $P_2$.

Other methods are possible for measuring height h. For example, it is possible to equip the vehicle 2 with a geolocalisation sensor such as a GPS sensor (Global Positioning System) connected to a database containing the geographic positions of each platform and their heights. In this embodiment, starting from the position measured by the GPS sensor on the vehicle 2, the unit 40 extracts from the database the height of the platform in front of which vehicle 2 has stopped at that moment.

It is also possible to obtain the distance $d$ from an automatic bus driving system, through reference markers placed on the road surface.

The process in figure 4 can also be implemented by gradually increasing height $h_v$ from a low position.

As a variation, the sensor 42 is fitted to move in rotation around an axis that is parallel to the direction of movement of the vehicle 2, so as to allow the line of sight 46 to move, varying the value of the angle $\alpha$. In this variation, step 110 is replaced by a step in which it is not the height $h_v$ which is being varied at a pitch $\Delta h$, but instead angle $\alpha$ which is moved by pitch $\Delta \alpha$ in operations 114 and 118. In this case, its is the second derivative of distance $c$ with respect to angle $\alpha$ which passes through an extreme, when the line of sight 46 is pointing exactly at the end of surface 32 opposite the vehicle 2.

In order to move the sensor 42 it is also possible to fix it onto the ramp 30 such as, for example, at the end of the ramp. Next, ramp 30 is moved from its retracted position to its open position, resulting in sensor 42 being moved. Height $h$ is then measured by adapting one of the methods described above. Once the height h has been measured, the height of the floor is adjusted according to the height $h$ measured.

Here, the ramp 30 has been described in the specific case where it is formed of a single rigid plate in a single piece without any hinges. As a variation, the ramp could be formed of several plates, hinged together.

When ramp 30 is moved from its retracted position to its open position, it moves by rotation only. As a variation, ramp 30 moves between its retracted and open positions by means of a translatory movement only. To this end, for example, the ramp is fitted onto a slide guide. More generally, the movement of the ramp between its retracted position and its open position could be a combination of rotation and translatory movement.

**Claims**

1. Transport vehicle for persons with reduced mobility, said vehicle having :

   - a floor (12) which supports passengers with reduced mobility,
   - a controllable mechanism (20) to adjust the height of the floor with respect to a rolling surface on which the vehicle rests, and
   - a vehicle access device (4) to allow persons with reduced mobility to access the vehicle, equipped with a ramp (30) joined to the vehicle and movable between an open position, in which it reduces the space between the floor of the vehicle and a docking surface (32) on an exterior platform (34) in order to aid the boarding or alighting of persons with reduced mobility, and a retracted position inside the vehicle, **characterised in that** said vehicle access device (4) includes

   a) at least one sensor (42) suitable for measuring a distance $c$ along a line of sight (46) which is inclined at an angle $\alpha$ with respect to the vertical of the vehicle, thus determining the value h which is the distance between a first and a second parallel planes ($P_1$, $P_2$), the first plane being integral with the floor and parallel to the floor and the second plane being integral with the platform and parallel to the docking surface,
   b) at least one sensor (44) suitable for measuring a distance d along a line of sight (48) perpendicular to the direction in which the vehicle is travelling and directed towards the platform (34),
   c) a control unit (40) able to check that whether or not the distance d is less than a predetermined threshold thus allowing or preventing the opening of the ramp (30) and able to automatically guide the mechanism (20) to adjust the height of the floor according to the height of the platform in a direction perpendicular to the rolling surface according to the measured distance h.

2. Transport vehicle according to claim 1, **characterized in that** said access ramp (30) can only be moved along a plane parallel to the vehicle floor.

3. Transport vehicle according to claim 1 or 2, **characterized in that** said control unit (40) is able to automatically guide the adjustment mechanism to maintain the height of the floor in a predetermined operational range at least for as long as the ramp is in its open position.

4. Transport vehicle according to any of the preceding claims, **characterized in that** said access ramp (30) is further provided with an obstacle detector (58).

5. Transport vehicle according to claim 4, **characterized in that** said obstacle detector (58) is a sensor provided on the surface of said ramp (30) which is opposite to the platform (34) when said ramp (30) is in the open position.

6. Transport vehicle according to any of the preceding claims, **characterized in that** said control unit (40) also includes a memory containing the various thresholds and parameters necessary for it to work.

7. Transport vehicle according to any of the preceding claims, **characterized in that** said control unit (40) is able to check whether or not the measured distance h is comprised in a permissible operative range of threshold values.

8. Transport vehicle according to claim 1, **characterized in that** said control unit (40) is able to guide the adjustment mechanism according to the position of an extreme of the second derivative of distance $\underline{c}$ with respect to a physical magnitude representing the position of said line of sight (46).

9. The vehicle access device (4) according to claims 1 to 8.

10. Process for accessing a vehicle for persons with reduced mobility, with the help of an access device (4) according to claim 9, **characterised in that** the process includes:

  - a step (72) in which unit 40 checks that the distance d is less than a predetermined threshold $S_1$,
  - a step (80) in which the sensor (42) measure the distance c and transmits it to control unit (40),
  - a step (82) in which the control unit (40) calculates the distance h on the basis of the measured distance c with the help of the relation $h = c \cdot \cos\alpha$,
  - a step (84) in which unit 40 checks that the distance d is comprised in a permissible operative range $[S_1; S_2]$ then allowing or avoiding the opening of the ramp (30),
  - a step (88) in which the adjustment mechanism for the floor height is automatically guided according to the height of the platform in a direction perpendicular to the rolling surface, and
  - a step (90) in which the access ramp moves between its retracted position and its open position.

11. Process according to claim 10, **characterised in that** the process includes a step (96) in which the adjustment mechanism is automatically guided to maintain the height of the floor within a predetermined range when the access ramp is in its open position.

12. Process according to claim 10 or 11, **characterised in that** it includes:

  - a step (112, 116, 120) for measuring said distance $\underline{c}$ along a line of sight that can be moved with respect to the external platform when the vehicle stops, said distance $\underline{c}$ depending on the height of the platform, and
  - a step (144) in which the adjustment mechanism is guided.according to the position of an extreme of the second derivative of distance c with respect to a physical magnitude that represents the position of the line of sight.

**Patentansprüche**

1. Transportfahrzeug für Personen mit beschränkter Mobilität, wobei das Fahrzeug umfasst:

  - eine Bühne (12), welche Beifahrer mit beschränkter Mobilität trägt,
  - einen steuerbaren Mechanismus (20), um die Höhe der Bühne hinsichtlich einer Rolloberfläche einzustellen, auf der das Fahrzeug ruht, und
  - eine Fahrzeugeinsteigevorrichtung (4), die es Personen mit beschränkter Mobilität ermöglicht, in das Fahrzeug einzusteigen, das mit einer Rampe (30), die mit dem Fahrzeug verbunden und bewegbar ist zwischen einer geöffneten Position, in welcher sie den Raum zwischen dem Boden des Fahrzeugs und einer Andockfläche (32) an einer externen Plattform (34) vermindert, um beim Einsteigen und Aussteigen von Personen mit beschränkter Mobilität zu helfen, und einer zurückgezogenen Position innerhalb des Fahrzeuges, **dadurch gekennzeichnet, dass** die Fahrzeugeinsteigevorrichtung (4) umfasst

  a) wenigstens einen Sensor (42), der geeignet ist, um einen Abstand $\underline{c}$ entlang einer Sichtlinie (46) zu messen, welche in einem Winkel $\alpha$ hinsichtlich der Vertikalen des Fahrzeuges geneigt ist, um somit den Wert h zu bestimmen, welcher der Abstand zwischen einer ersten und einer zweiten parallelen Ebene ($P_1$, $P_2$) ist, wobei die erste Ebene an der Bühne und parallel zu der Bühne liegt und die zweite Ebene an der Plattform und parallel zu der Andockfläche liegt,

b) wenigstens einen Sensor (44), der geeignet ist, um eine Abstand d entlang der Sichtlinie (48) zu messen, die senkrecht zu der Richtung ist, in welche sich das Fahrzeug bewegt, und die in Richtung zu der Plattform (34) gerichtet ist,

c) eine Steuereinheit (40), die in der Lage ist, zu überprüfen, ob oder ob nicht der Abstand d geringer ist als der vorgegebene Schwellenwert, um somit das Öffnen der Rampe (30) zu ermöglichen oder zu verhindern, und die in der Lage ist, den Mechanismus (20) automatisch zu führen, um die Höhe der Bühne entsprechend der Höhe der Plattform in einer Richtung einzustellen, die senkrecht zu der Rolloberfläche entsprechend des gemessenen Abstandes h ist.

2. Transportfahrzeug nach Anspruch 1, **dadurch gekennzeichnet, dass** die Einsteigerampe (30) sich nur entlang einer Ebene bewegen kann, die parallel zu dem Fahrzeugboden ist.

3. Transportfahrzeug nach Anspruch 1 oder 2, **dadurch gekennzeichnet, dass** die Steuereinheit (40) in der Lage ist, den Einstellmechanismus automatisch zu führen, um die Höhe der Bühne in einem vorgegebenen Betriebsbereich mindestens so lange zu halten, wie sich die Rampe in ihrer geöffneten Position befindet.

4. Transportfahrzeug nach einem der vorhergehenden Ansprüche, **dadurch gekennzeichnet, dass** die Einsteigerampe (30) ferner mit einem Hindernis-Detektor (58) ausgestattet ist.

5. Transportfahrzeug nach Anspruch 4, **dadurch gekennzeichnet, dass** der Hindernis-Detektor (58) ein Sensor ist, der an der Oberfläche der Rampe (30) vorgesehen ist, welche der Plattform (34) gegenüberliegt, wenn sich die Rampe (30) in der geöffneten Position befindet.

6. Transportfahrzeug nach einem der vorhergehenden Ansprüche, **dadurch gekennzeichnet, dass** die Steuereinheit (40) ebenso einen Speicher enthält, der die verschiedenen Schwellenwerte und die für sie zum Arbeiten notwendigen Parameter beinhaltet.

7. Transportfahrzeug nach einem der vorhergehenden Ansprüche, **dadurch gekennzeichnet, dass** die Steuereinheit (40) in der Lage ist, zu überprüfen, ob oder ob nicht der gemessenen Abstand h in einem zulässigen Betriebsbereich der Schwellenwerte enthalten ist.

8. Transportfahrzeug nach Anspruch 1, **dadurch gekennzeichnet, dass** die Steuereinheit (40) in der Lage ist, den Einstellmechanismus entsprechend der Position eines Extremwertes der zweiten Ableitung des Abstandes c̲ hinsichtlich einer physikalischen Größe zu führen, die die Position der Sichtlinie (46) darstellt.

9. Fahrzeugeinsteigevorrichtung (4) nach den Ansprüchen 1 bis 8.

10. Verfahren zum Einsteigen in ein Fahrzeug für Personen mit beschränkter Mobilität, mit Hilfe einer Einsteigevorrichtung (4) nach Anspruch 9, **dadurch gekennzeichnet, dass** das Verfahren enthält:

   - einen Schritt (72), in welchem die Einheit (40) überprüft, dass der Abstand d geringer ist als der vorgegebene Schwellenwert $S_1$,
   - einen Schritt (80), in welchem der Sensor (42) den Abstand c misst und diesen an die Steuereinheit (40) überträgt,
   - einen Schritt (82), in welchem die Steuereinheit (40) den Abstand h auf der Grundlage des gemessenen Abstandes c mit Hilfe der Gleichung $h = c \cdot \cos\alpha$ berechnet.
   - einen Schritt (84), in welchem die Einheit (40) überprüft, dass der Abstand d in einem zulässigen Betriebsbereich $[S_1; S_2]$ umfasst ist, um dann das Öffnen der Rampe (30) zu ermöglichen oder zu verhindern,
   - einen Schritt (88), in welchem der Einstellmechanismus für die Bühnenhöhe automatisch entsprechend der Höhe der Plattform in einer Richtung senkrecht zu der Rolloberfläche geführt wird, und
   - einen Schritt (90), in welchem sich die Einsteigerampe zwischen ihrer zurückgezogenen Position und ihrer geöffneten Position bewegt.

11. Verfahren nach Anspruch 10, **dadurch gekennzeichnet, dass** das Verfahren einen Schritt (96) enthält, in welchem der Einstellmechanismus automatisch geführt wird, um die Höhe der Bühne innerhalb eines vorgegebenen Bereiches zu halten, wenn sich die Einsteigerampe in ihrer geöffneten Position befindet.

**12.** Verfahren nach Anspruch 10 oder 11, **dadurch gekennzeichnet, dass** es enthält:

- einen Schritt (112, 116, 120), um den Abstand <u>c</u> entlang der Sichtlinie zu messen, welche sich hinsichtlich der externen Plattform bewegen kann, wenn das Fahrzeug anhält, wobei der Abstand <u>c</u> von der Höhe der Plattform abhängt, und
- einen Schritt (144), in welchem der Einstellmechanismus entsprechend der Position eines Höchstwertes der zweiten Ableitung des Abstandes <u>c</u> hinsichtlich einer physikalischen Größe geführt wird, welche die Position der Sichtlinie darstellt.

**Revendications**

**1.** Véhicule de transport pour des personnes à mobilité réduite, ledit véhicule comportant :

- un plancher (12) qui supporte des passagers à mobilité réduite,
- un mécanisme pouvant être commandé (20) pour régler la hauteur du plancher par rapport à une surface de roulement sur laquelle repose le véhicule, et
- un dispositif d'accès de véhicule (4) pour permettre à des personnes à mobilité réduite d'accéder au véhicule, équipé d'une rampe (30) jointe au véhicule et mobile entre une position ouverte, dans laquelle elle réduit l'espace entre le plancher du véhicule et une surface de pose (32) sur une plate-forme extérieure (34) afin d'aider les personnes à mobilité réduite à monter ou à descendre, et une position rétractée à l'intérieur du véhicule, **caractérisé en ce que** ledit dispositif d'accès de véhicule (4) comprend

a) au moins un capteur (42) approprié pour mesurer une distance c le long d'une ligne de visée (46) qui est inclinée à un angle $\alpha$ par rapport à la verticale du véhicule, déterminant ainsi la valeur h qui est la distance entre des premier et second plans parallèles ($P_1$, $P_2$), le premier plan étant intégral avec le plancher et parallèle au plancher et le second plan étant intégral avec la plate-forme et parallèle à la surface de pose,
b) au moins un capteur (44) approprié pour mesurer une distance d le long d'une ligne de visée (48) perpendiculaire à la direction dans laquelle le véhicule se déplace et dirigée vers la plate-forme (34),
c) une unité de commande (40) capable de contrôler si la distance d est inférieure à un seuil prédéterminé ou non, permettant ou empêchant ainsi l'ouverture de la rampe (30), et capable de guider automatiquement le mécanisme (20) pour régler la hauteur du plancher selon la hauteur de la plate-forme dans une direction perpendiculaire à la surface de roulement selon la distance mesurée h.

**2.** Véhicule de transport selon la revendication 1, **caractérisé en ce que** ladite rampe d'accès (30) peut seulement être déplacée le long d'un plan parallèle au plancher de véhicule.

**3.** Véhicule de transport selon la revendication 1 ou 2, **caractérisé en ce que** ladite unité de commande (40) est capable de guider automatiquement le mécanisme de réglage pour maintenir la hauteur du plancher dans une plage de fonctionnement prédéterminée au moins pendant que la rampe est dans sa position ouverte.

**4.** Véhicule de transport selon une quelconque des revendications précédentes, **caractérisé en ce que** ladite rampe d'accès (30) est en outre pourvue d'un détecteur d'obstacle (58).

**5.** Véhicule de transport selon la revendication 4, **caractérisé en ce que** ledit détecteur d'obstacle (58) est un capteur prévu sur la surface de ladite rampe (30) qui est opposée à la plate-forme (34) lorsque ladite rampe (30) est dans la position ouverte.

**6.** Véhicule de transport selon une quelconque des revendications précédentes, **caractérisé en ce que** ladite unité de commande (40) comprend également une mémoire contenant les divers seuils et paramètres nécessaires pour qu'elle fonctionne.

**7.** Véhicule de transport selon une quelconque des revendications précédentes, **caractérisé en ce que** ladite unité de commande (40) est capable de contrôler si la distance mesurée h est comprise dans une plage de fonctionnement admissible de valeurs de seuil ou non.

**8.** Véhicule de transport selon la revendication 1, **caractérisé en ce que** ladite unité de commande (40) est capable de guider le mécanisme de réglage selon la position d'un extrême de la seconde dérivée de distance c par rapport

EP 1 787 613 B1

à une amplitude physique représentant la position de ladite ligne de visée (46).

9. Dispositif d'accès de véhicule (4) selon les revendications 1 à 8.

10. Procédé pour accéder à un véhicule pour des personnes à mobilité réduite, à l'aide d'un dispositif d'accès (4) selon la revendication 9, **caractérisé en ce que** le procédé comprend :

- une étape (72) dans laquelle une unité (40) contrôle que la distance d est inférieure à un seuil prédéterminé $S_1$,
- une étape (80) dans laquelle le capteur (42) mesure la distance c et la transmet à l'unité de commande (40),
- une étape (82) dans laquelle l'unité de commande (40) calcule la distance h sur la base de la distance mesurée c à l'aide de la relation $h = c \cdot \cos\alpha$,
- une étape (84) dans laquelle l'unité (40) contrôle que la distance d est comprise dans une plage de fonctionnement admissible $[S_1 ; S_2]$, permettant ou évitant alors l'ouverture de la rampe (30),
- une étape (88) dans laquelle le mécanisme de réglage pour la hauteur de plancher est guidé automatiquement selon la hauteur de la plate-forme dans une direction perpendiculaire à la surface de roulement, et
- une étape (90) dans laquelle la rampe d'accès se déplace entre sa position rétractée et sa position ouverte.

11. Procédé selon la revendication 10, **caractérisé en ce que** le procédé comprend une étape (96) dans laquelle le mécanisme de réglage est automatiquement guidé pour maintenir la hauteur du plancher au sein d'une plage prédéterminée lorsque la rampe d'accès est dans sa position ouverte.

12. Procédé selon la revendication 10 ou 11, **caractérisé en ce qu'**il comprend :

- une étape (112, 116, 120) pour mesurer ladite distance c le long d'une ligne de visée qui peut être déplacée par rapport à la plate-forme externe lorsque le véhicule s'arrête, ladite distance c dépendant de la hauteur de la plate-forme, et
- une étape (144) dans laquelle le mécanisme de réglage est guidé selon la position d'un extrême de la seconde dérivée de distance c par rapport à une amplitude physique qui représente la position de la ligne de visée.

Fig.1

Fig.2

EP 1 787 613 B1

Fig.3

Fig.4

Fig.5

EP 1 787 613 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9746417 A